(19)

Europäisches Patentamt

European Patent Office

Office européen des brevets

(11)  EP 2 618 503 A2

(12)  **EUROPEAN PATENT APPLICATION**
published in accordance with Art. 153(4) EPC

(43) Date of publication:
     **24.07.2013 Bulletin 2013/30**

(51) Int Cl.:
     *H04J 11/00* (2006.01)   *H04B 7/26* (2006.01)
     *H04W 72/04* (2009.01)

(21) Application number: **11825380.6**

(22) Date of filing: **08.09.2011**

(86) International application number:
     **PCT/KR2011/006681**

(87) International publication number:
     **WO 2012/036420 (22.03.2012 Gazette 2012/12)**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**

(30) Priority: **16.09.2010 US 383716 P**

(71) Applicant: **LG Electronics Inc.**
     **Yeongdeungpo-gu**
     **Seoul 150-721 (KR)**

(72) Inventors:
     • **PARK, Kyujin**
       **Anyang-si**
       **Gyeonggi-do 431-080 (KR)**

     • **CHO, Hangyu**
       **Anyang-si**
       **Gyeonggi-do 431-080 (KR)**
     • **LIM, Dongguk**
       **Anyang-si**
       **Gyeonggi-do 431-080 (KR)**
     • **KANG, Seunghyun**
       **Anyang-si**
       **Gyeonggi-do 431-080 (KR)**

(74) Representative: **Gunzelmann, Rainer**
     **Wuesthoff & Wuesthoff**
     **Patent- und Rechtsanwälte**
     **Schweigerstraße 2**
     **81541 München (DE)**

(54)  **DEVICE FOR TRANSMITTING/RECEIVING BASIC RESOURCE GRID TYPE INFORMATION IN
      A WIRELESS COMMUNICATION SYSTEM SUPPORTING A PLURALITY OF SERVING CELLS
      AND METHOD THEREOF**

(57)     Provided are a device for transmitting/receiving Basic Resource Grid (BRG) type information in a wireless communication system supporting a plurality of serving cells, and a method thereof. According to an embodiment of the present invention, a basic station device for transmitting BRG type information in a wireless communication system supporting a plurality of serving cells includes: a processor for configuring each BRG type for at least one serving cell configured in a terminal; and a transmitter for transmitting the configured BRG type information to the terminal.

FIG. 4

EP 2 618 503 A2

## Description

### Field of the Invention

The present invention relates to wireless communication, and more particularly to a method and apparatus for transmitting and receiving basic resource grid type information in a wireless communication system supporting a plurality of serving cells.

### Background Art

As a representative example of a wireless communication system of the present invention, 3rd Generation Partnership Project Long Term Evolution (3GPP LTE) and LTE-Advanced (LTE-A) communication systems will hereinafter be described in detail.

Each base station (BS) includes one or more cells. One cell of the BS is set to use a bandwidth such as 1.25, 2.5, 5, 10, 15 or 20MHz to provide a downlink or uplink transmission service to user equipments (UEs). Here, different cells may be set to use different bandwidths. The BS controls transmission and reception of data for several UEs. In association with downlink (DL) data, the BS transmits downlink (DL) scheduling information to a corresponding UE, so as to inform the corresponding UE of time/frequency domains where data is to be transmitted, coding information, data size information, Hybrid Automatic Repeat and reQuest (HARQ) - related information, and the like. In association with uplink (UL) data, the BS transmits UL scheduling information to the corresponding UE, so that it informs the corresponding UE of time/frequency domains capable of being used by the corresponding UE, coding information, data size information, HARQ-related information, and the like. An interface for transmission of user traffic or control traffic may be used between BSs. A Core Network (CN) may include an Access Gateway (AG) and a network node for user registration of the UE. The AG manages mobility of a UE on the basis of a Tracking Area (TA) composed of several cells.

Although wireless communication technology has been developed to LTE technology on the basis of WCDMA technology, users and enterprises continuously demand new features and services. In addition, other wireless access technologies are being developed, such that there is a need for new or improved wireless access technology in order to remain competitive in the long run. For example, reduction in cost per bit, increase of service availability, adaptive frequency band utilization, a simple structure, an open-type interface, and appropriate user equipment (UE) power consumption are needed for new or improved wireless access technology.

Recently, 3GPP has been establishing a standard task for a subsequent technique of LTE. In this specification, such a technique is referred to as "LTE-Advanced" or "LTE-A". One of the main differences between an LTE system and an LTE-A system is a system bandwidth.

The LTE-A system is aimed at supporting a broadband of a maximum of 100 MHz, and to this end, the LTE-A system is designed to use a carrier aggregation or bandwidth aggregation technique using a plurality of frequency blocks. Carrier aggregation employs a plurality of frequency blocks as one big logical frequency band in order to use a wider frequency band. A bandwidth of each frequency block may be defined based on a bandwidth of a system block used in the LTE system. Each frequency block is transmitted using a component carrier.

Machine-to-machine (M2M) communication is communication between electronic devices as the name implies. While M2M communication means wired or wireless communication between electronic devices or communication between a human-controlled device and a machine in the broadest sense, these days M2M communication typically refers to wireless communication between electronic devices.

When the concept of M2M communication was introduced in the early 1990s, it was regarded merely as the concept of remote control or telematics and the market therefor was very limited. However, M2M communication has been rapidly developed and the M2M communication market has attracted much attention all over the world over the past few years. Especially, M2M communication has a great influence in the fields of fleet management, remote monitoring of machines and facilities, smart metering for automatically measuring the working time of construction equipment and the consumption of heat or electricity, etc. in the Point Of Sales (POS) market and security-related applications. It is expected that M2M communication will find various uses in conjunction with legacy mobile communication, very high-speed wireless Internet or Wireless Fidelity (Wi-Fi), and low-output communication solutions such as ZigBee and thus will extend beyond Business to Business (B2B) markets to Business to Customer (B2C) markets.

In the era of M2M communication, every machine equipped with a Subscriber Identity Module (SIM) card can be managed and controlled remotely because it is possible to transmit data to and receive data from the machine. For example, M2M communication is applicable to a very broad range including numerous terminals and equipment such as a car, a truck, a train, a container, an automatic vending machine, a gas tank, etc.

Carrier aggregation technology is used for bandwidth extension and the number of various types of UEs is rapidly increased, such that there is a need to provide a method for efficiently supporting resource allocation and scheduling for such UEs. However, the above-mentioned method has not yet been disclosed.

**Detailed Description of the Invention**

**Technical Problem**

An other object of the present invention is to provide a method for allowing a base station (BS) to transmit basic resource grid (BRG) type information in a wireless communication system supporting a plurality of serving cells.

Another object of the present invention is to provide a method for allowing a user equipment (UE) to receive BRG type information in a wireless communication system supporting a plurality of serving cells.

Another object of the present invention is to provide a base station (BS) apparatus for transmitting BRG type information in a wireless communication system supporting a plurality of serving cells.

Another object of the present invention is to provide a method for receiving BRG type information in a wireless communication system supporting a plurality of serving cells.

It is to be understood that technical objects to be achieved by the present invention are not limited to the aforementioned technical objects and other technical objects which are not mentioned herein will be apparent from the following description to one of ordinary skill in the art to which the present invention pertains.

**Technical Solution**

The object of the present invention can be achieved by providing a method for transmitting Basic Resource Grid (BRG) type information by a base station (BS) in a wireless communication system supporting a plurality of serving cells, the method comprising: configuring a basic resource grid (BRG) type for each of at least one serving cell configured in a user equipment (UE); and transmitting the configured BRG type information to the UE. The BRG types configured in the at least one serving cell may be different from each other. The configured BRG types may have different BRG sizes. The serving cell may be an uplink (UL) serving cell. The configured BRG type may be semi-statically configured; and the configured BRG type information may be transmitted through higher layer signaling. The configured BRG type may be dynamically configured, and the BRG type may be configured in units of at least one of a subframe, a frame and a HARQ process in a first serving cell from among the at least one serving cells configured in the UE. The BRG type may be configured in the first serving cell according to a time division multiplexing (TDM) scheme, a frequency division multiplexing (FDM) scheme, or a combination of the TDM and FDM schemes. If the BRG type is configured in the first serving cell in units of a subframe, the BRG type information may be transmitted over a downlink control channel every subframe.

In another aspect of the present invention, a method for transmitting Basic Resource Grid (BRG) type information by a base station (BS) in a wireless communication system supporting a plurality of serving cells includes: configuring a basic resource grid (BRG) type for each user equipment (UE) in a serving cell commonly configured in a plurality of UEs; and transmitting the configured BRG type information to the plurality of UEs. The BRG types configured in the UEs may be different from each other. The BRG type for the each UE may be semi-statically configured, and the configured BRG type information may be transmitted through higher layer signaling. The BRG type for the each UE may be dynamically configured in units of at least one of a subframe, a frame and a HARQ process. If the dynamically configured BRG type information for the each UE is configured in units of a subframe, the BRG type information for each UE may be transmitted through a downlink control channel every subframe.

In another aspect of the present invention, a method for receiving Basic Resource Grid (BRG) type information by a user equipment (UE) in a wireless communication system supporting a plurality of serving cells includes: receiving basic resource grid (BRG) type information of at least one serving cell configured in the UE from a base station (BS); and transmitting uplink data through the at least one serving cell on the basis of the received BRG type information.

In another aspect of the present invention, a base station (BS) for transmitting Basic Resource Grid (BRG) type information in a wireless communication system supporting a plurality of serving cells includes: a processor for configuring a basic resource grid (BRG) type for each of at least one serving cell configured in a user equipment (UE); and a transmitter for transmitting the configured BRG type information to the UE.

In another aspect of the present invention, a base station (BS) for transmitting Basic Resource Grid (BRG) type information in a wireless communication system supporting a plurality of serving cells includes: a processor for configuring a basic resource grid (BRG) type for each user equipment (UE) in a serving cell commonly configured in a plurality of UEs; and a transmitter for transmitting the configured BRG type information to the plurality of UEs.

In another aspect of the present invention, a user equipment (UE) for receiving Basic Resource Grid (BRG) type information in a wireless communication system supporting a plurality of serving cells includes: a receiver for receiving basic resource grid (BRG) type information of at least one serving cell configured in the UE from a base station (BS); and a transmitter for transmitting uplink data through the at least one serving cell on the basis of the received BRG type information.

**Effects of the Invention**

As is apparent from the above description, exemplary embodiments of the present invention can efficiently support resource allocation and scheduling for UEs in a carrier aggregation - based wireless communication system in which the number of various types of UEs is rapidly increasing.

It will be appreciated by persons skilled in the art that the effects that can be achieved with the present invention are not limited to what has been particularly described hereinabove and other advantages of the present invention will be more clearly understood from the following detailed description taken in conjunction with the accompanying drawings.

**Brief Description of the Drawings**

The accompanying drawings, which are included to provide a further understanding of the invention, illustrate embodiments of the invention and together with the description serve to explain the principle of the invention.

FIG. 1 is a block diagram illustrating a base station (BS) and a user equipment (UE) for use in a wireless communication system.

FIG. 2 is a diagram illustrating a structure of a radio frame used in a 3GPP LTE system acting as an exemplary mobile communication system.

FIGS. 3A and 3B are exemplary structural diagrams illustrating downlink and uplink subframes for use in a 3GPP LTE system acting as an exemplary mobile communication system according to the present invention.

FIG. 4 shows a downlink resource grid structure for use in an LTE system serving as a mobile communication system according to an embodiment of the present invention.

FIGS. 5A to 5D illustrate four BRG types for use in 3GPP LTE/LTE-A systems serving as a wireless communication system.

FIGS. 6A and 6B illustrate examples of UE-specific BRG structures.

**Best Mode for Carrying Out the Invention**

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. The following detailed description includes specific details in order to provide a thorough understanding of the present invention. However, it will be apparent to those skilled in the art that the present invention may be practiced without such specific details. For example, the following description will be given centering upon a mobile communication system serving as a 3GPP LTE or LTE-A system, but the present invention is not limited thereto and the remaining parts of the present invention other than unique characteristics of the 3GPP LTE or LTE-A system are applicable to other mobile communication systems.

In some cases, in order to prevent ambiguity of the concepts of the present invention, conventional devices or apparatuses well known to those skilled in the art will be omitted and be denoted in the form of a block diagram on the basis of important functions of the present invention. Wherever possible, the same reference numbers will be used throughout the drawings to refer to the same or like parts.

In the following description, a terminal may refer to a mobile or fixed user equipment (UE), for example, a user equipment (UE), a mobile station (MS) and the like. Also, the base station (BS) may refer to an arbitrary node of a network end which communicates with the above terminal, and may include an eNode B (eNB), a Node B (Node-B), an access point (AP) and the like. The term "UE" for use in the present invention may also be referred to as a Machine to Machine (M2M) terminal or a Human Type Communication (HTC) terminal.

In a mobile communication system, the UE may receive information from the base station (BS) via a downlink, and may transmit information via an uplink. The information that is transmitted and received to and from the UE includes data and a variety of control information. A variety of physical channels are used according to categories of transmission (Tx) and reception (Rx) information of the UE.

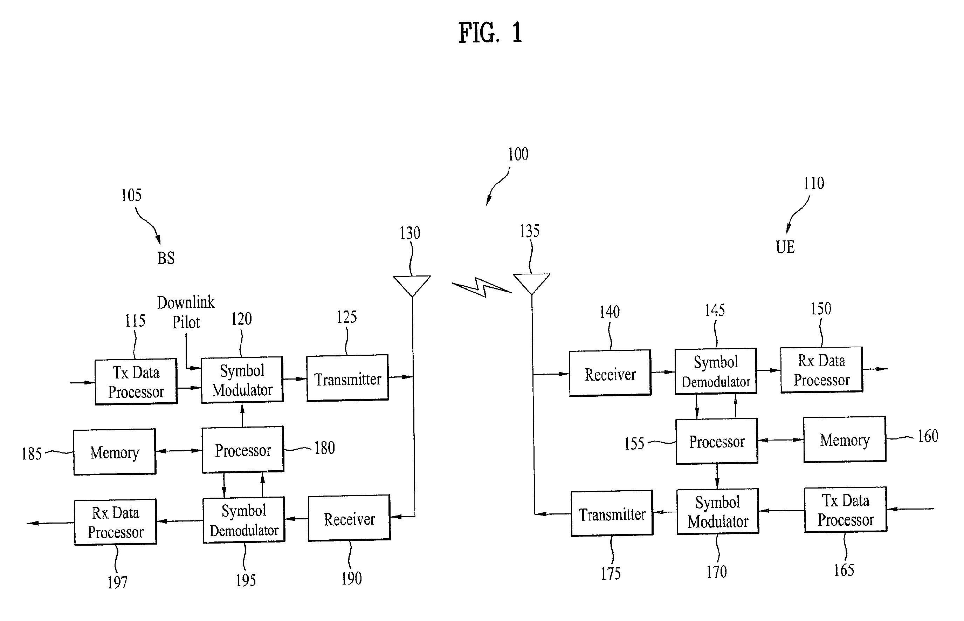

FIG. 1 is a block diagram illustrating a base station (BS) 105 and a user equipment (UE) 110 for use in a wireless communication system 100 according to the present invention.

Although FIG. 1 shows one BS 105 and one UE 110 for brief description of the wireless communication system 100, it should be noted that the wireless communication system 100 may further include one or more BSs and/or one or more UEs.

Referring to FIG. 1, the BS 105 may include a transmission (Tx) data processor 115, a symbol modulator 120, a transmitter 125, a transmission/reception antenna 130, a processor 180, a memory 185, a receiver 190, a symbol demodulator 195, and a reception (Rx) data processor 197. The UE 110 may include a Tx data processor 165, a symbol modulator 170, a transmitter 175, a transmission/reception antenna 135, a processor 155, a memory 160, a receiver 140, a symbol demodulator 155, and a Rx data processor 150. In FIG. 1, although one antenna 130 is used for the BS 105 and one antenna 135 is used for the UE 110, each of the BS 105 and the UE 110 may also include a plurality of antennas as necessary. Therefore, the BS 105 and the UE 110 according to the present invention support a Multiple Input Multiple Output (MIMO) system. The BS 105 according to the present invention can support both a Single User-MIMO (SU-MIMO) scheme and a Multi User-MIMO (MU-MIMO) scheme.

In downlink, the Tx data processor 115 receives traffic data, formats the received traffic data, codes the formatted traffic data, and interleaves the coded traffic data, and modulates the interleaved data (or performs symbol mapping upon the interleaved data), such that it provides modulation symbols (i.e., data symbols). The symbol modulator 120 receives and processes the data symbols and pilot symbols, such that it provides a stream of symbols.

The symbol modulator 120 multiplexes data and pilot symbols, and transmits the multiplexed data and pilot symbols to the transmitter 125. In this case, each transmission (Tx) symbol may be a data symbol, a pilot symbol, or a value of a zero signal (null signal). In each symbol period, pilot symbols may be successively transmitted during each symbol period. The pilot symbols may be an FDM symbol, an OFDM symbol, a Time Division Multiplexing (TDM) symbol, or a Code Division Multiplexing (CDM) symbol.

The transmitter 125 receives a stream of symbols, converts the received symbols into one or more analog signals, and additionally adjusts the one or more analog signals (e.g., amplification, filtering, and frequency upconversion of the analog signals), such that it generates a downlink signal appropriate for data transmission through an RF channel. Subsequently, the downlink signal is transmitted to the RN through the antenna 130. The Tx antenna 130 transmits the generated DL signal to the UE.

Configuration of the UE 110 will hereinafter be described in detail. The Rx antenna 135 of the UE 110 receives a DL signal from the BS 105, and transmits the DL signal to the receiver 140. The receiver 140 performs adjustment (e.g., filtering, amplification, and frequency downconversion) of the received DL signal, and digitizes the adjusted signal to obtain samples. The symbol demodulator 145 demodulates the received pilot symbols, and provides the demodulated result to the processor 155 to perform channel estimation.

The symbol demodulator 145 receives a frequency response estimation value for downlink from the processor 155, demodulates the received data symbols, obtains data symbol estimation values (indicating estimation values of the transmitted data symbols), and provides the data symbol estimation values to the Rx data processor 150. The Rx data processor 150 performs demodulation (i.e., symbol-demapping) of data symbol estimation values, deinterleaves the demodulated result, decodes the deinterleaved result, and recovers the transmitted traffic data.

The processing of the symbol demodulator 145 and the Rx data processor 150 is complementary to that of the symbol modulator 120 and the Tx data processor 115 in the eNB 105.

The Tx data processor 165 of the UE 110 processes traffic data in uplink, and provides data symbols. The symbol modulator 170 receives and multiplexes data symbols, and modulates the multiplexed data symbols, such that it can provide a stream of symbols to the transmitter 175. The transmitter 175 receives and processes the stream of symbols to generate an uplink (UL) signal, and the UL signal is transmitted to the BS 105 through the Tx antenna 135.

The BS 105 receives the UL signal from the UE 110 through the antenna 130. The receiver processes the received UL signal to obtain samples. Subsequently, the symbol demodulator 195 processes the symbols, and provides pilot symbols and data symbol estimation values received via uplink. The Rx data processor 197 processes the data symbol estimation value, and recovers traffic data received from the UE 110.

Processor 155 or 180 of the UE 110 or the BS 105 commands or indicates operations of the UE 110 or the BS 105. For example, the processor 155 or 180 of the UE 110 or the BS 105 controls, adjusts, and manages operations of the UE 110 or the BS 105. Each processor 155 or 180 may be connected to a memory unit 160 or 185 for storing program code and data. The memory 160 or 185 is connected to the processor 155 or 180, such that it can store the operating system, applications, and general files.

The processor 155 or 180 may also be referred to as a controller, a microcontroller), a microprocessor, a microcomputer, etc. In the meantime, the processor 155 or 180 may be implemented by various means, for example, hardware, firmware, software, or a combination thereof. In a hardware configuration, methods according to the embodiments of the present invention may be implemented by the processor 155 or 180, for example, one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, methods according to the embodiments of the present invention may be implemented in the form of modules, procedures, functions, etc. which perform the above-described functions or operations. Firmware or software implemented in the present invention may be contained in the processor 155 or 180 or the memory unit 160 or 185, such that it can be driven by the processor 155 or 180.

Radio interface protocol layers among the UE 110, the BS 105, and a wireless communication system (i.e., network) can be classified into a first layer (L1 layer), a second layer (L2 layer) and a third layer (L3 layer) on the basis of the lower three layers of the Open System Interconnection (OSI) reference model widely known in communication systems. A physical layer belonging to the first layer (L1) provides an information transfer service through a physical channel. A Radio Resource Control (RRC) layer belonging to the third layer (L3) controls radio resources between the UE and the network. The UE 110 and the BS 105 may exchange RRC messages with each other through the wireless communication network and the RRC layer.

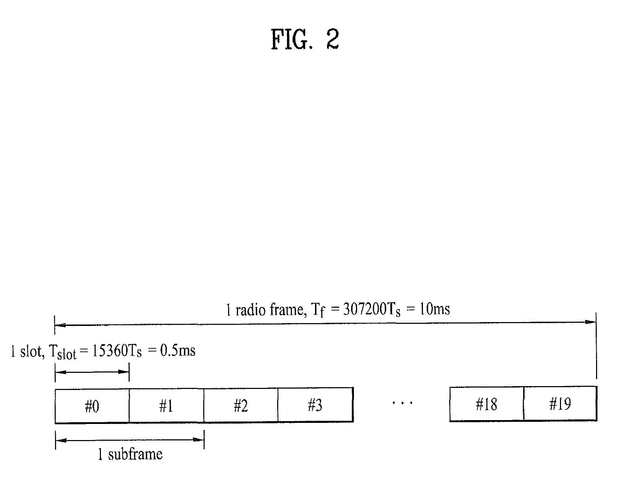

FIG. 2 is a diagram illustrating a structure of a radio frame used in a 3GPP LTE system acting as a mobile communication system.

Referring to FIG. 2, the radio frame has a length of 10ms (327200*$T_s$) and includes 10 subframes of equal size. Each subframe has a length of 1ms and includes two slots. Each slot has a length of 0.5ms (15360*$T_s$). In this case, $T_s$ represents a sampling time, and is expressed by '$T_s$ = 1/(15kHz*2048) = 3.2552*10$^{-8}$ (about 33ns)'. The slot includes a plurality of OFDM or SC-FDMA symbols in a time domain, and includes a plurality of resource blocks (RBs) in a frequency domain.

In the LTE system, one resource block includes twelve (12) subcarriers * seven (or six) OFDM (Orthogonal Frequency Division Multiplexing) symbols. A Transmission Time Interval (TTI) which is a transmission unit time of data can be determined in a unit of one or more subframes. The aforementioned structure of the radio frame is only exemplary, and various modifications can be made to the number of subframes contained in the radio frame or the number of slots contained in each subframe, or the number of OFDM or SC-FDMA symbols in each slot.

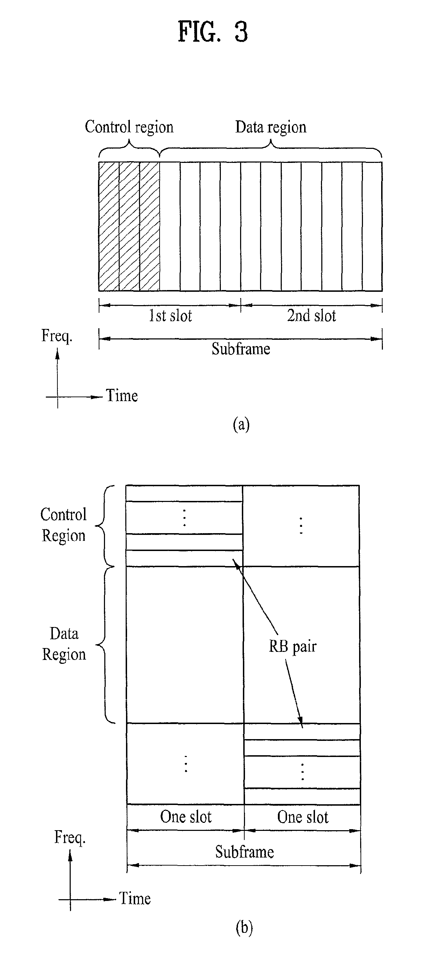

FIGS. 3A and 3B are exemplary structural diagrams illustrating downlink and uplink subframes for use in a 3GPP LTE system acting as an exemplary mobile communication system according to the present invention.

Referring to FIG. 3A, one downlink subframe includes two slots in a time domain. A maximum of three OFDM symbols located in the front of the downlink subframe are used as a control region to which control channels are allocated, and the remaining OFDM symbols are used as a data region to which a Physical Downlink Shared Channel (PDSCH) channel is allocated.

DL control channel for use in the 3GPP LTE system includes a Physical Control Format Indicator CHannel (PCFICH), a Physical Downlink Control Channel (PDCCH), a Physical Hybrid-ARQ Indicator CHannel (PHICH), and the like. The traffic channel includes a Physical Downlink Shared CHannel (PDSCH). PCFICH transmitted through a first OFDM symbol of the subframe may carry information about the number of OFDM symbols (i.e., the size of control region) used for transmission of control channels within the subframe. Control information transmitted through PDCCH is referred to as downlink control information (DCI). The DCI may indicate UL resource allocation information, DL resource allocation information, UL transmission power control commands of arbitrary UE groups, etc. PHICH may carry ACK (Acknowledgement) / NACK (Not-Acknowledgement) signals about an UL Hybrid Automatic Repeat Request (UL HARQ). That is, the ACK/NACK signals about UL data transmitted from the UE are transmitted over PHICH.

PDCCH acting as a DL physical channel will hereinafter be described in detail.

A base station (BS) may transmit information about resource allocation and transmission format (UL grant) of the PDSCH, resource allocation information of the PUSCH, information about Voice over Internet Protocol (VoIP) activation, etc. A plurality of PDCCHs may be transmitted within the control region, and the UE may monitor the PDCCHs. Each PFCCH includes an aggregate of one or more contiguous control channel elements (CCEs). The PDCCH composed of the aggregate of one or more contiguous CCEs may be transmitted through the control region after performing subblock interleaving. CCE is a logical allocation unit for providing a coding rate based on a Radio frequency (RF) channel status to the PDCCH. CCE may correspond to a plurality of resource element groups. PDCCH format and the number of available PDCCHs may be determined according to the relationship between the number of CCEs and the coding rate provided by CCEs.

Control information transmitted over PDCCH is referred to as downlink control information (DCI). The following Table 1 shows DCIs in response to DCI formats.

[Table 1]

| DCI format | Description |
| --- | --- |
| DCI format 0 | used for the scheduling of PUSCH |
| DCI format 1 | used for the scheduling of one PDSCH codeword |
| DCI format 1A | used for the compact scheduling of one PDSCH codeword and random access procedure initiated by a PDCCH order |
| DCI format 1B | used for the compact scheduling of one PDSCH codeword with precoding information |
| DCI format 1C | used for very compact scheduling of one PDSCH codeword |

(continued)

| DCI format | Description |
|---|---|
| DCI format 1D | used for the compact scheduling of one PDSCH codeword with precoding and power offset information |
| DCI format 2 | used for scheduling PDSCH to UEs configured in closed-loop spatial multiplexing mode |
| DCI format 2A | used for scheduling PDSCH to UEs configured in open-loop spatial multiplexing mode |
| DCI format 3 | used for the transmission of TPC commands for PUCCH and PUSCH with 2-bit power adjustments |
| DCI format 3A | used for the transmission of TPC commands for PUCCH and PUSCH with single bit power adjustments |

In Table 1, DCI format 0 may indicate uplink resource allocation information. DCI format 1 and DCI format 2 may indicate downlink resource allocation information. DCI format 3 and DCI format 3A may indicate uplink transmit power control (TPC) commands for arbitrary UE groups.

A method for allowing a base station (BS) to perform resource mapping for PDCCH transmission in the LTE system will hereinafter be described in detail.

Generally, the BS may transmit scheduling allocation information and other control information over the PDCCH. Information about a physical control channel is configured in the form of one aggregate (one aggregation) or several CCEs, such that the resultant information is transmitted as one aggregate or several CCEs. Namely, a PDCCH transmission unit of the BS is a CCE. One CCE includes 9 resource element groups (REGs). The number of RBGs unallocated to either Physical Control Format Indicator Channel (PCFICH) or Physical Hybrid Automatic Repeat Request Indicator Channel (PHICH) is $N_{REG}$. CCEs from 0 to $N_{CCE}$-1 may be available to a system $N_{CCE} = \lfloor N_{REG} / 9 \rfloor$ (where ).

PDCCH supports multiple formats as shown in the following Table 2. One PDCCH composed of n contiguous CCEs begins with a CCE having 'i mod n = 0' (where 'i' is a CCE number). Multiple PDCCHs may be transmitted through one subframe.

[Table 2]

| PDCCH format | Number of CCEs | Number of resource element groups | Number of PDCCH bits |
|---|---|---|---|
| 0 | 1 | 9 | 72 |
| 1 | 2 | 18 | 144 |
| 2 | 4 | 36 | 288 |
| 3 | 8 | 72 | 576 |

Referring to Table 2, an eNode B (eNB) may decide a PDCCH format according to how many regions are required for the BS to transmit control information. The UE reads control information and the like in units of a CCE, resulting in reduction of overhead.

Referring to FIG. 3B, an uplink (UL) subframe may be divided into a control region and a data region in a frequency domain. The control region may be assigned to a Physical Uplink Control Channel (PUCCH) carrying uplink control information (UCI). The data region may be assigned to a Physical Uplink Shared Channel (PUSCH) carrying user data. In order to maintain single carrier characteristics, one UE does not simultaneously transmit PUCCH and PUSCH. PUCCH for one UE may be assigned to a Resource Block (RB) pair in one subframe. RBs of the RB pair occupy different subcarriers in two slots. The RB pair assigned to PUCCH performs frequency hopping at a slot boundary.

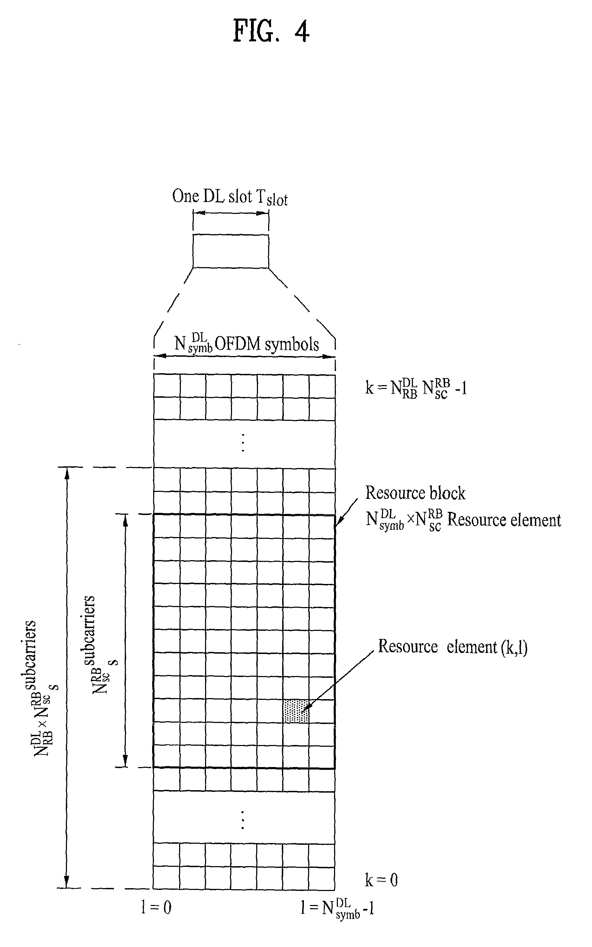

FIG. 4 shows a downlink resource grid structure for use in an LTE system serving as a mobile communication system according to an embodiment of the present invention.

Referring to FIG. 4, downlink transmission resources can be described by a resource grid including $N_{RB}^{DL} \times N_{SC}^{RB}$ subcarriers and $N_{symb}^{DL}$ OFDM symbols. Here, $N_{RB}^{DL}$ represents the number of resource blocks (RBs) in a downlink, $N_{SC}^{RB}$ represents the number of subcarriers constituting one RB, and $N_{symb}^{DL}$ represents the number of OFDM symbols in one downlink slot. $N_{RB}^{DL}$ varies with a downlink transmission bandwidth constructed in a cell, and must satisfy $N_{RB}^{min,DL} \leq N_{RB}^{DL} \leq N_{RB}^{max,DL}$. Here, $N_{RB}^{min,DL}$ is the smallest downlink bandwidth supported by the wireless communication system, and $N_{RB}^{max,DL}$ is the largest downlink bandwidth supported by the wireless communication system. Although $N_{RB}^{min,DL}$ may be set to 6 ($N_{RB}^{min,DL} = 6$) and $N_{RB}^{max,DL}$ may be set to 110 ($N_{RB}^{max,DL} = 110$), the scopes of $N_{RB}^{min,UL}$ and $N_{RB}^{max,UL}$ are not limited thereto. The number of OFDM symbols contained in one slot may be differently defined according to the length of a Cyclic Prefix (CP) and spacing between subcarriers. When transmitting data or information via multiple antennas, one resource grid may be defined for each antenna port.

Each element contained in the resource grid for each antenna port is called a resource element (RE), and can be identified by an index pair (*k,l*) contained in a slot, where k is an index in a frequency domain and is set to any one of $0,...,N_{RB}^{DL} N_{sc}^{RB} - 1$, and *l* is an index in a time domain and is set to any one of $0,...,N_{symb}^{DL} - 1$.

Resource blocks (RBs) shown in FIG. 4 are used to describe a mapping relationship between certain physical channels and resource elements (REs). The RBs can be classified into physical resource blocks (PRBs) and virtual resource blocks (VRBs). One PRB is defined by $N_{symb}^{DL}$ consecutive OFDM symbols in a time domain and $N_{SC}^{RB}$ consecutive subcarriers in a frequency domain. $N_{symb}^{DL}$ and $N_{SC}^{RB}$ may be predetermined values, respectively. For example, $N_{symb}^{DL}$ and $N_{SC}^{RB}$ may be given as shown in the following Table 3. Therefore, one PRB may be composed of $N_{symb}^{DL} \times N_{SC}^{RB}$ resource elements. One PRB may correspond to one slot in a time domain and may also correspond to 180kHz in a frequency domain, but it should be noted that the scope of the present invention is not limited thereto.
[Table 3]

| Configuration | | $N_{sc}^{RB}$ | $N_{symb}^{DL}$ |
|---|---|---|---|
| Normal cyclic prefix | $\Delta f$ = 15 kHz | 12 | 7 |
| Extended cyclic prefix | $\Delta f$ = 15 kHz | | 6 |
| | $\Delta f$ = 7.5 kHz | 24 | 3 |

The PRBs are assigned numbers from 0 to $N_{RB}^{DL} - 1$ in the frequency domain. A PRB number $n_{PRB}$ and a resource element index (*k,l*) in a slot can satisfy a predetermined relationship denoted by $n_{PRB}$ $n_{PRB} = \left\lfloor \dfrac{k}{N_{sc}^{RB}} \right\rfloor$.

The VRB may have the same size as that of the PRB. The VRB may be classified into a localized VRB (LVRB) and a distributed VRB (DVRB). For each VRB type, a pair of PRBs allocated over two slots of one subframe is assigned a single VRB number $n_{VRB}$.
The VRB may have the same size as that of the PRB. Two types of VRBs are defined, the first one being a localized VRB (LVRB) and the second one being a distributed type (DVRB). For each VRB type, a pair of PRBs may have a single VRB index (which may hereinafter be referred to as a 'VRB number') and are allocated over two slots of one subframe. In other words, $N_{RB}^{DL}$ VRBs belonging to a first one of two slots constituting one subframe are each assigned any one index of 0 to $N_{RB}^{DL}$-1, and $N_{RB}^{DL}$ VRBs belonging to a second one of the two slots are likewise each assigned any one index of 0 to $N_{RB}^{DL}$-1.

Although FIG. 4 shows a DL resource grid structure for use in the LTE system, the DL resource grid structure is similar to a UL resource grid structure. However, only resource block (RB) parameters of the UL resource grid structure can be represented by the following Table 4 different from the DL resource grid structure shown in Table 3.
[Table 4]

| Configuration | $N_{SC}^{RB}$ | $N_{symb}^{UL}$ |
|---|---|---|
| Normal cyclic prefix | 12 | 7 |
| 12 | 6 | 6 |

A method for allowing the BS to transmit a PDCCH to a UE in the LTE system will hereinafter be described in detail.
The BS determines a PDCCH format according to a DCI to be sent to the UE, and attaches a Cyclic Redundancy Check (CRC) to control information. A unique identifier (e.g., a Radio Network Temporary Identifier (RNTI)) is masked onto the CRC according to PDCCH owners or utilities. In case of a PDCCH for a specific UE, a unique ID of a UE, for example, C-RNTI (Cell-RNTI) may be masked onto CRC. Alternatively, in case of a PDCCH for a paging message, a paging indication ID (for example, R-RNTI (Paging-RNTI)) may be masked onto CRC. In case of a PDCCH for system information (SI), a system information ID (i.e., SI-RNTI) may be masked onto CRC. In order to indicate a random access response acting as a response to a UE's random access preamble transmission, RA-RNTI (Random Access - RNTI) may be masked onto CRC. The following Table 5 shows examples of IDs masked onto PDCCH.
[Table 5]

| Type | Identifier | Description |
|---|---|---|
| UE-specific | C-RNTI | used for the UE corresponding to the C-RNTI. |
| common | P-RNTI | used for paging message. |
| | SI-RNTI | used for system information (It could be differentiated according to the type of system information). |
| | RA-RNTI | used for random access response (It could be differentiated according to subframes or PRACH slot index for UE PRACH transmission) |
| | TPC-RNTI | used for uplink transmit power control command (It could be differentiated according to the index of UE TPC group). |

If C-RNTI is used, PDCCH may carry control information for a specific UE. If another RNTI is used, PDCCH may carry common control information that is received by all or some UEs contained in the cell. The BS performs channel coding of the CRC-added DCI so as to generate coded data. The BS performs rate matching according to the number of CCEs allocated to a PDCCH format. Thereafter, the BS modulates the coded data so as to generate modulated symbols. In addition, the BS maps the modulated symbols to physical resource elements.
Meanwhile, the IEEE 802.16 system may use a station identifier (STID), instead of C-RNTI, as a unique UE identifier for transmitting control information to a specific UE. STID is 12 bits long, and is used as an identifier allocated to each UE so as to allow the BS to identify each UE. The BS allocates the STID to each UE for network entry. In addition, the BS may allocate a new STID to a UE for network reentry. Temporary STID (TSTID) is temporarily used to protect mapping between STIDs used after network entry.
In this way, the BS allocates an STID to a UE for network entry. There is a need to additionally allocate the STID not only to the legacy UE (i.e., HTC terminal) but also to the M2M terminal (or M2M device) in the current mobile communication system. In this case, the application types of the M2M terminal will hereinafter be described in detail.
Such a terminal that communicates in an M2M manner as described above can be referred to as an M2M device, an M2M communication terminal, or a Machine Type Communication (MTC) terminal. M2M devices will gradually increase in number in a given network as machine application types thereof increase. Machine application types under consideration are (1) security; (2) public safety; (3) tracking and tracing; (4) payment; (5) healthcare; (6) remote maintenance and control; (7) metering; (8) consumer devices; (9) fleet management in Point Of Sale (POS)-related and security-related application markets; (10) M2M communication at a vending machine; (11) remote control of machines and facilities and smart metering for automatically measuring the operation time of construction equipment and facilities and heat or power consumption; and (12) surveillance video communication, which should not be construed as limiting the present invention. Besides, many other machine application types are being discussed.

As the number of M2M terminal application types increases, the number of M2M communication devices can rapidly increase compared to the number of conventional mobile communication devices. Therefore, if each M2M communication device communicates with the BS, serious load may occur in a wireless interface and collision (for example, PHICH collision) may occur according to the BS scheduling scheme.

The conventional wireless communication system (for example, LTE, IEEE 802.16) has been focused upon communication with the HTC terminal. Specifically, various QoS parameters and PHY/MAC protocols have been designed on the basis of communication with the HTC terminal. However, as described above, a method for supporting M2M-type communication over a wireless communication network has recently been proposed without user intervention.

Specifically, if the M2M terminal is proposed, there is a high possibility that many UEs having the same function and the same traffic generation characteristics are simultaneously introduced into the cell by one UE or one service provider. In addition, the M2M terminal including a fixed position and no mobility requires a communication scheme for requesting lower power consumption as compared to UE throughput enhancement. Broadband data burst does not occur at random in the same manner as in the legacy HTC terminal, and M2M terminals in which a small amount of data bursts are generated at intervals of a predetermined time may be proposed.

The embodiment of the present invention provides a method for allocating various resource grid types to a UE and signaling the allocated result by one cell or one BS under the condition that various M2M terminals and several DL/UL component carriers (CCs) are supported. In this case, carrier aggregation (CA) for use in a Long Term Evolution - Advanced (LTE-A) system acting as one example of the next-generation wireless communication system will hereinafter be described in detail.

The LTE-A system employs carrier aggregation (CA) technology, and multiple component carriers (CCs) are aggregated for transmission, such that a transmission bandwidth of a UE is increased and the use efficiency of a frequency is also increased. The LTE-A system simultaneously combines multiple carriers instead of a single carrier used in the legacy LTE Rel 8/9, and uses the combined carriers, such that the bandwidth can be extended up to 100MHz. In other words, a carrier defined up to a maximum of 20MHz in the legacy LTE Rel 8/9 is re-defined as a component carrier (or a component carrier), such that one UE can use a maximum of 5 component carriers (CCs) using carrier aggregation technology.

The current carrier aggregation (CA) (or carrier integration) technology has the following characteristics.

(1) Aggregation of contiguous component carriers (CCs) is supported, and aggregation of non-contiguous CCs is supported.

(2) The number of UL carrier aggregations (CAs) may be different from the number of DL CAs. If it is necessary for the current CA technology to be compatible with the previous system, UL and DL must configure the same number of CCs.

(3) Different numbers of CCs are configured in UL and DL such that different transmission bandwidths can be obtained.

(4) In association with the UE, each CC independently transmits one transport block, and an independent hybrid automatic repeat request (HARQ) mechanism is used.

Differently from the legacy LTE system designed to use one component carrier (CC), it is necessary for a carrier aggregation (CA) system using a plurality of CCs to effectively manage component carriers (CCs). In order to effectively manage CCs, the CCs can be classified according to their roles and characteristics. CCs may be classified into a primary component carrier (PCC) and a secondary component carrier (SCC). The PCC is used as a center component carrier of CC management when multiple CCs are used, and one PCC is allocated to one UE.

The remaining CCs other than one PCC are defined as secondary component carriers (SCCs). SCC may also be referred to as a secondary cell (Scell). The PCC is a kernel carrier that manages all integrated CCs, and the remaining SCCs may provide additional frequency resources to achieve a high transfer rate. For example, the eNode B may achieve RRC for signaling with a UE through a primary component carrier (PCC). Information for security and higher layer signaling may also be achieved through a PCC. Indeed, if there is only one CC, the corresponding CC may be used as a PCC. In this case, the corresponding CC may perform the same role as a carrier of the legacy LTE system. The BS may allocate an activated component carrier (ACC) from among multiple CCs to a UE. The UE has already recognized the ACC allocated to the UE itself through signaling. DL CC transmitted from the BS to the UE or UL CC transmitted from the UE to the BS may be referred to as a serving cell.

The term "multicarrier system" used in the present invention refers to a system that uses an aggregation of one or more carriers having a smaller bandwidth than a target bandwidth when configuring a target wideband in order to support wideband. The term "multicarrier" or "multiple carriers" refers to carrier aggregation (or carrier linkage or combination). Here, the term "carrier aggregation" refers not only to an aggregate of contiguous carriers but also to an aggregate of non-contiguous carriers. The term "carrier aggregation" may also be used interchangeably with the terms "bandwidth aggregation" and "spectrum aggregation". All the proposed methods of the present invention are not limited to carrier aggregation types (for example, contiguous carrier aggregation and non-contiguous carrier aggregation, symmetrical carrier aggregation, asymmetrical carrier aggregation, etc.), and are also not limited to PDCCH transmission methods (for example, cross-carrier scheduling, no cross-carrier scheduling, etc.).

The cell-specific carrier aggregation may be carrier aggregation (CA) formed by an arbitrary BS or cell. In case of FDD, the cell-specific carrier aggregation may be a DL-UL linkage decided according to the default Tx-Rx separation defined by LTE Rel-8 and/or LTE-A. In addition, if the LTE-A only Tx-Rx separation is defined, the cell-specific DL/UL linkage may be defined according to the corresponding linkage.

One embodiment of the present invention provides a method for enabling the BS to establish a plurality of resource grid sizes, each of which is used as a resource allocation unit of a data channel of an M2M dedicated UL CC. Specifically, one embodiment of the present invention proposes a method for reusing a reference symbol (or a reference signal) or pilot structure for demodulating UL transmission data simultaneously while establishing a plurality of resource grid types, and informing the UE of the established result, and also proposes a UL scheduling method for the above method.

In a general wireless communication system, a physical resource has a basic resource unit. In this case, the basic resource unit is a basic unit for physical resource allocation and/or scheduling for data transmission. In the case of the 3GPP LTE/LTE-A system UL acting as an exemplary wireless communication system, the BS allocates resources to an RB pair (i.e., 2 slots = one subframe) composed of $N_{SC}^{RB} \times N_{symb}^{UL}$ RBs (where $N_{SC}^{RB} = 12$ subcarriers, and $N_{symb}^{UL}$ may be 6 symbols for an extended CP or may be 7 symbols for a normal CP) resource allocation using an RB pair as a basic unit. That is, the BS performs resource allocation using [(12 subcarriers × 12 symbols) (in case of the extended CP) or (12 subcarrier × 14 symbols) (in case of a normal CP)] as a basic unit.

The present invention provides a method for enabling the BS to establish various types of resource grids of UL CC for the UE and a signaling method associated with the method. In accordance with one embodiment of the present invention, the present invention provides not only various types of resource grids of M2M dedicated UL CCs, but also associated signaling method.

Although the embodiment of the present invention is disclosed only on the basis of a normal CP of 3GPP LTE/LTE-A for convenience of description and better understanding of the present invention, the scope or spirit of the present invention is not limited thereto, and the same concept can also be applied to the extended CP and the same IEEE 802.16 system.

<u>**<1. Definition of Various Basic Resource Grid Types >**</u>

The BS may establish a dedicated UL CC so as to perform efficient resource allocation for a UE (e.g., M2M device) having various characteristics and/or so as to perform scheduling support for the UE. The BS may define a plurality of basic resource grid (BRG) types so as to efficiently support UL data transmission of a UL (for example, M2M terminal) per UL CC (for example, per M2M dedicated UL CC).

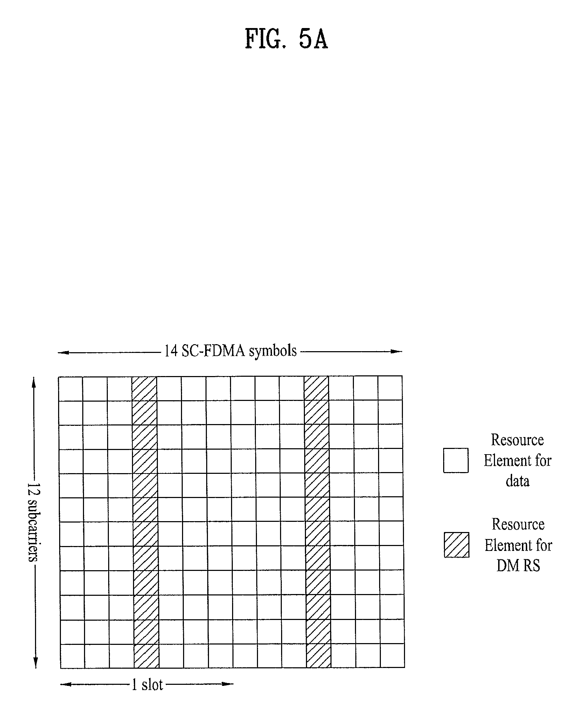

FIGS. 5A to 5D illustrate four BRG types for use in 3GPP LTE/LTE-A systems serving as a wireless communication system.

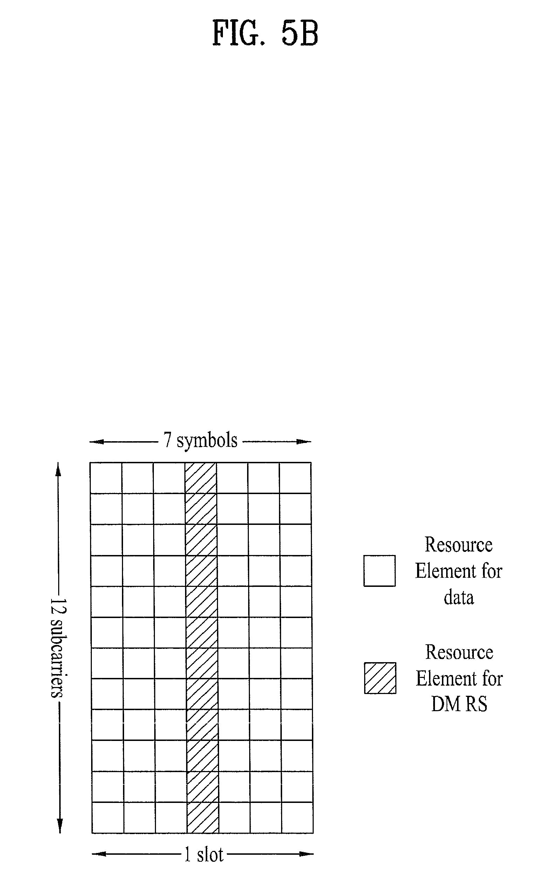

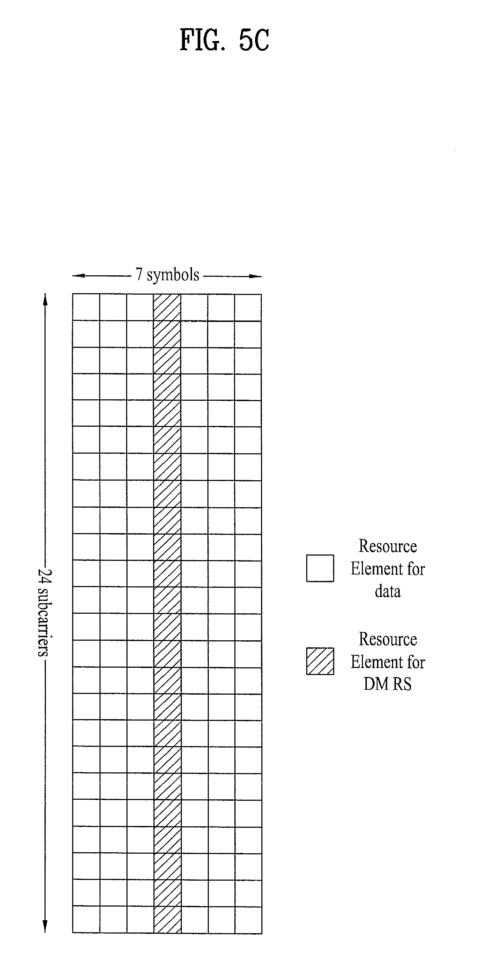

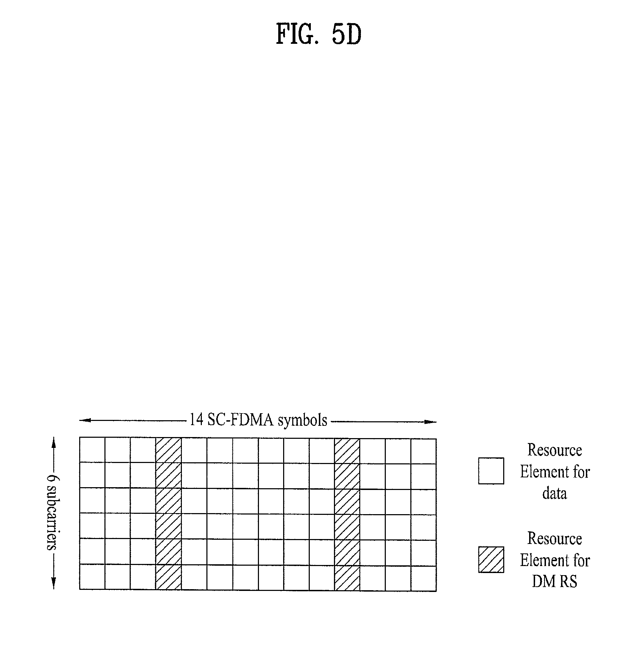

Although each BRG type shown in FIGS. 5A to 5D is used as a UL BRG type, it can also be applied to a DL BRG. Referring to FIG. 5A, the BRG of FIG. 5A is defined as a first type BRG. The first type BRG is one example and may be composed of 12 subcarriers and 14 SC-FDMA symbols. Referring to FIG. 5B, the BRG of FIG. 5B is defined as a second type BRG, and the second BRG is one example and may be composed of 12 subcarriers and 7 SC-FDMA symbols. Referring to FIG. 5C, the BRG of FIG. 5C is defined as a third BRG. The third type BRG is one example and may be composed of 24 subcarriers and 7 SC-FDMA symbols. Referring to FIG. 5D, the BRG is defined as a fourth type BRG. The fourth BRG is one example and may be composed of 6 subcarriers and 14 SC-FDMA symbols. The first to fourth types BRG sizes are shown in the following Table 6.

[Table 6]

| Basic resource grid (BRG) structures | $N_{SC}^{RB}$ | $N_{symb}^{UL}$ |
|---|---|---|
| First type BRG | 12 | 14 |
| Second type BRG | 12 | 7 |
| Third type BRG | 24 | 7 |
| Fourth type BRG | 6 | 14 |

Since the BS establishes different BRG sizes according to individual types, the BS may perform scheduling on the basis of a BRG type suitable for per-UE requirement. For example, the BS may perform resource allocation and/or scheduling on the basis of a second type or fourth type BRG having a relatively small-sized BRG for the UE requesting only a small amount of data transmission. In another example, the BS performs resource allocation and/or scheduling on the basis of a second type or third type BRG for the UE requesting a small amount of power consumption, and enables the UE to transmit data only for a short symbol time as well as to enter a micro sleep mode during the remaining symbol times, such that the UE can obtain the power saving effect. The BRG type shown in Table 6 is only exemplary and many more BRG types may be used as necessary. That is, the BRG size shown in Table 6 is only exemplary.

<2-1. CC-Specific BRG configuration) (semi-static configuration)>

The BS may configure a CC-specific BRG type according to the semi-static configuration scheme. As described above, if the BS defines a plurality of BRG types, (UL) CC-specific BRG types may be allocated. In addition, the BS may apply the Time Division Multiplexing (TDM) or Frequency Division Multiplexing (FDM) scheme for first to fourth-type BRGs to an arbitrary CC (for example, M2M dedicated UL CC), such that it may configure the CC-specific BRG type.

For example, assuming that the BS can multiplex and configure a plurality of BRG types (for example, the first to fourth-type BRGs) within a given (UL) CC according to the TDM scheme, multiplexing for each BRG type may be configured in units of a subframe, a frame, or a HARQ process. For example, if the BS multiplexes a plurality of BRG types in units of a subframe, the BS may semi-statically configure a BRG type for each of 10 subframes ranging from subframe #0 to subframe #9, and may broadcast the configuration information to each UE through the cell-specific higher layer signaling.

In another example, the BS may multiplex a plurality of BRG types within a given (UL) CC according to the FDM scheme. The BS may establish different BRG types per frequency band (or frequency subbands) within a given (UL) CC, and may broadcast the configuration information to each UE through cell-specific higher layer signaling.

In another example, the BS may combine the TDM scheme and the FDM scheme within a given (UL) within a given (UL) CC so as to obtain a hybrid format of the TDM and FDM schemes, so that it can construct a BRG type.

Each UE can perform UL data transmission on the basis of cell-specific UL layer signaling including BRG type information configured according to the TDM or FDM scheme within a CC (i.e., a serving cell) configured for the UE itself.

In still another example, the BS may configure different BRG types per CC for a plurality of UL CCs. That is, for UL CC 1, the BS configures the first type BRG. For other UL CC 2, the BS may configure the second type BRG. Information regarding different BRG types per UL CC may be transferred from the BS to the UE through higher layer signaling. As a result, each UE may perform UL data transmission on the basis of a BRG type corresponding to a UE-configured CC (i.e., a UE-configured serving cell).

<2-2. CC-Specific BRG configuration) (dynamic configuration)>

Although the above-mentioned CC-specific BRG type configuration has been semi-statically configured by the BS, the embodiment of the present invention relates to a dynamic configuration method by the BS,

The BS may transmit BRG configuration information (including BRG type information) of the corresponding subframe to the UE through a DL control channel [for example, a PDCCH (Physical Downlink Control Channel)] per subframe. For this purpose, the BS may apply the fixed modulation and coding scheme (MCS) to resource elements (REs) of a DL control channel, such that it may transmit BRG configuration information of the corresponding subframe or may perform CRC masking with SI-RNTI (cell common ID for system information transmission) and then transmit the CRC masking result through an arbitrary CCE.

The BS supports only one BRG type within a specific subframe according to the TDM scheme, dynamically configures different BRG types per subframe, and may inform the UE of the dynamically configured result over a DL control channel.

In another example, the BS may configure different BRG types per frequency band (or frequency subbands) per subframe according to the FDM scheme, and may inform the UE of the configured result over a DL control channel. If the BS configures the BRG type according to the FDM scheme, the frequency band (or frequency subband) for the corresponding BRG type may be implicitly established according to a CC bandwidth and the like, or may be dynamically established such that information regarding the frequency band (or subband) established as the corresponding BRG can also be transmitted to the UE when the BRG type is established.

For example, each UE may receive information regarding a BRG type being TDM- or FDM-configured in a UE-configured CC over a DL control channel per subframe, and may perform UL data transmission on the basis of BRG type information.

<u><3-1. UE-specific BRG configuration) (semi-statically configuration)></u>

This embodiment relates to a method for enabling the BS to establish different BRG types per UE in a given (UL) CC as well as to perform resource allocation and scheduling on the basis of the established BRG types.

The BS may select (or decide) an appropriate BRG type for each UE according to UE characteristics and requirements, and may use the selected BRG type as a basic unit for scheduling. That is, the BS may establish different BRG types per UE configured to perform scheduling over the same CC, and different time-frequency resource indexing methods for resource allocation may be used.

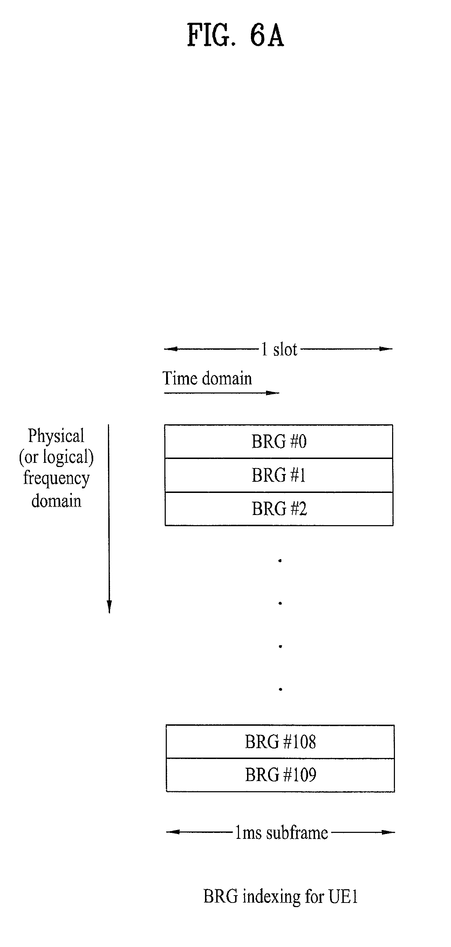

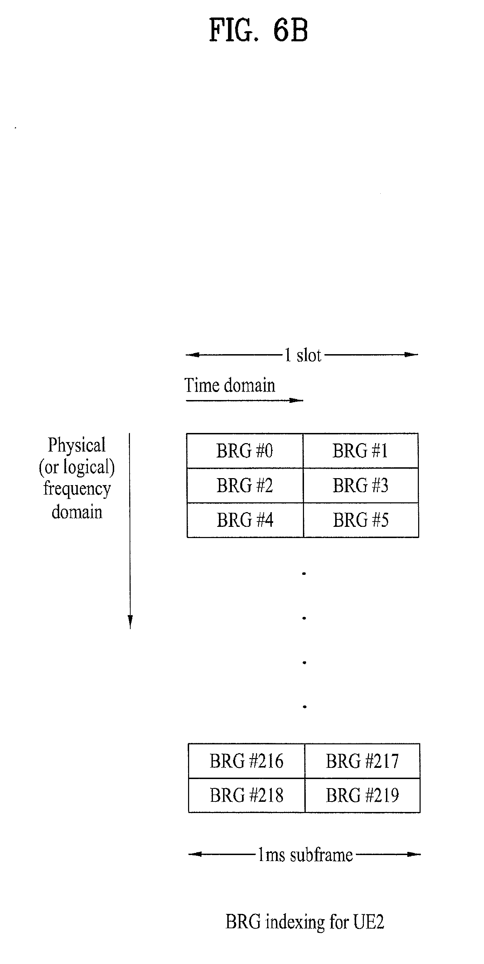

For example, according to a specific UL CC having a bandwidth of 110 RBs, in case of UE 1, the BS may establish a first type BRG as a basic unit for resource allocation. In case of UE 2, the BS may establish a second type BRG as a basic unit for resource allocation. In this case, BRG indexing for UL data channel resource allocation over a UL grant may be changed according to two UEs as shown in FIG. 6.

FIGS. 6A and 6B illustrate examples of UE-specific BRG structures.

Referring to FIG. 6A, the BS may configure a first type resource grid for UE 1 in a specific UL CC. The first type resource grid may be composed of 12 subcarriers and 14 symbols, and BRG indexing may be performed for only one subframe as shown in FIG. 6A. Referring to FIG. 6B, the BS configures a second type resource grid for UE 2 in a specific UL CC, and the number of symbols contained in the second type resource grid is smaller than the number of symbols contained in the first type resource grid by 7. Therefore, BRG indexing for UE 2 may be denoted as shown in FIG. 6B. BRG indexing numbers for UE 2 may be double that of the UE 1.

The BS may semi-statically establish a BRG type for each UE, and may transmit the established BRG result to each UE through UE-specific higher layer signaling. Resource allocation for the UE having received signaling information of a BRG type for each UE is achieved in units of UE-specific BRG or in units of a BRG group as shown in FIGS. 6A and 6B.

<u><3-2. UE-specific BRG configuration) (dynamic configuration))></u>

Differently from the above-mentioned example in which the UE-specific BRG configuration is semi-statically configured, this embodiment relates to a method for enabling the UE to establish different BRG types per UE within a given (UL) CC as well as to perform resource allocation and scheduling, and also relates to a method for dynamically establishing a BRG type.

In this case, differently from the above-mentioned example in which the BRG type is semi-statically configured through UE-specific higher layer signaling, the BS may dynamically establish a BRG type over a DL control channel (for example, PDCCH) in units of a subframe.

That is, the BS may further include a BRG type indication field in scheduling information to be transmitted to each UE, such that the resultant scheduling information including the BRG type indication field can be transmitted to each UE through a UL grant of each PDCCH. That is, the BS may inform each UE of BRG type information through the corresponding BRG type indication field. As a result, each UE may recognize BRG type information through the BRG type indication field contained in the UL grant of a PDCCH belonging to the UE itself, and may transmit UL data on the basis of the corresponding BRG type.

In the same manner as in the above-mentioned embodiment in which the BRG is semi-statically configured, each UE may use different BRG indexing according to BRG types within the corresponding CC. For example, the BS may allocate a first type BRG to the UE 1 through a BRG type indication field of a PDCCH UL grant, and may allocated a second type BRG to the UE 2 through a BRG type indication field of a PDCCH UL grant.

Therefore, in the same manner as in the above-mentioned embodiment in which the BRG is semi-statically configured, BRG indexing for each UE is changed as shown in FIGS. 6A and 6B, such that the BS may perform resource allocation and/or scheduling.

Each UE can transmit UL data on the basis of a BRG type indicated by the BRG type indication field of the PDCCH UL grant corresponding to the UE itself.

<u><PHICH resource mapping ></u>

In the 3GPP LTE/LTE-A system acting as an exemplary wireless communication system, a PHICH (Physical Hybrid ARQ Indicator Channel) acting as a response to transmission of a UL data channel (e.g., UL-SCH) of the UE is used to carry a HARQ ACK/NACK signal per subframe. PHICH resource mapping (PHICH REs + Code) for legacy UL transmission is implicitly comprised of both the lowest RB index value for UL data transmission and a DM RS (Demodulation Reference Signal) Cyclic Shift (CS) value.

The DM RS cyclic shift (CS) value is allocated and adjusted by the BS through the UL grant, and the lowest RB index value obtained by UL data transmission is decided by UL grant scheduling of the BS, such that the BS may establish/schedule the corresponding value capable of preventing PHICH collision. However, if the BRG indexing scheme is UE-specifically changed in the above-mentioned embodiment, per-UE BRG indexing value at which data transmission is achieved through the corresponding UL CC may be changed. In this case, the BS may perform PHICH resource mapping using the lowest resource grid index value instead of the lowest RB index when performing PHICH resource mapping of the UE. Differently from the above-mentioned method, after the BS performs re-indexing of the corresponding CC in units of a conventional RB unit irrespective of the BRG indexing method for each UE, the BS may perform PHICH resource mapping on the basis of the lowest RB index value from among a UL data transmission region of the corresponding UE.

Although the above-mentioned description has disclosed four BRG types for convenience of description and better understanding of the present invention, it should be noted that a BRG having different subcarrier sizes or different symbol sizes may also be contained in the scope or spirit of the present invention without difficulty. The BS may define a plurality of resource grids each having an arbitrary size, instead of a single resource grid, may CC-specifically establish such resource grids as necessary, or may also UE-specifically establish such resource grids without departing from the scope or spirit of the present invention.

Although the above-mentioned embodiments have been disclosed on the basis of the physical structure of the 3GPP LTE/LTE-A system, it should be noted that the same concept of the present invention can also be applied to the IEEE 802.16 systems without change. In addition, although the above-mentioned embodiments have exemplarily disclosed not only establishment of a plurality of resource grids for UL transmission on the basis of a UL CC, but also signaling for the established resource grids, it should be noted that the same concept can also be applied to a method for establishing a DL CC and a DL resource grid without difficulty.

In accordance with the second type BRG and the third type BRG, the number of symbols contained in the first type BRG is a half of the number of symbols contained in the fourth type BRG. As described above, assuming that the same subframe sizes are used irrespective of the BRG types, two BRGs may be inserted into the same subframe on a time domain for use in each of the second type BRG and the third type BRG. However, the above-mentioned BRG insertion may also be interpreted in different ways as necessary. That is, each of the second type BRG and the third type BRG may have the same subframe size as in the number of BRG symbols as necessary. That is, various subframe sizes may be used in the present invention as necessary. In this case, subframe configuration information must be transferred from the BS to UEs through higher layer signaling. In addition, the BS must always maintain alignment on the basis of a specific subframe having the largest number of symbols so as to adjust a subframe boundary, and may further divide the corresponding subframe into a plurality of mini-subframes as necessary. In this case, control signaling or associated HARQ timing information may be transmitted on the basis of a subframe, or may also be transmitted on the basis of a newly configured mini-subframe.

Exemplary embodiments described hereinbelow are combinations of elements and features of the present invention. The elements or features may be considered selective unless mentioned otherwise. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. Also, it will be obvious to those skilled in the art that claims that are not explicitly cited in the appended claims may be presented in combination as an exemplary embodiment of the present invention or included as a new claim by subsequent amendment after the application is filed.

**Industrial Applicability**

The method and apparatus for transmitting and receiving BRG (Basic Resource Grid) type information in a wireless communication system supporting a plurality of serving cells can be applied to various mobile communication systems, for example, 3GPP LTE, LTE-A, IEEE 802, etc. for industrial purposes.

**Claims**

1. A method for transmitting Basic Resource Grid (BRG) type information by a base station (BS) in a wireless communication system supporting a plurality of serving cells, the method comprising:

   configuring a basic resource grid (BRG) type for each of at least one serving cell configured in a user equipment (UE); and
   transmitting the configured BRG type information to the UE.

2. The method according to claim 1, wherein the BRG types configured in the at least one serving cell are different from each other.

3. The method according to claim 1, wherein the configured BRG types have different BRG sizes.

4. The method according to claim 1, wherein the serving cell is an uplink (UL) serving cell.

5. The method according to claim 1, wherein:

the configured BRG type is semi-statically configured; and
the configured BRG type information is transmitted through a higher layer signaling.

6. The method according to claim 1, wherein:

the configured BRG type is dynamically configured, and
wherein the BRG type is configured in units of at least one of a subframe, a frame and a HARQ process in a first serving cell from among the at least one serving cells configured in the UE.

7. The method according to claim 6, wherein the BRG type is configured in the first serving cell according to a time division multiplexing (TDM) scheme, a frequency division multiplexing (FDM) scheme, or a combination of the TDM and FDM schemes.

8. The method according to claim 6, wherein:

if the BRG type is configured in the first serving cell in units of a subframe, the BRG type information is transmitted over a downlink control channel every subframe.

9. A method for transmitting Basic Resource Grid (BRG) type information by a base station (BS) in a wireless communication system supporting a plurality of serving cells, the method comprising:

configuring a basic resource grid (BRG) type for each user equipment (UE) in a serving cell commonly configured in a plurality of UEs; and
transmitting the configured BRG type information to the plurality of UEs.

10. The method according to claim 9, wherein the BRG types configured in the UEs are different from each other.

11. The method according to claim 9, wherein the BRG type for the each UE is semi-statically configured, and the configured BRG type information is transmitted through a higher layer signaling.

12. The method according to claim 9, wherein the BRG type for the each UE is dynamically configured in units of at least one of a subframe, a frame and a HARQ process.

13. The method according to claim 12, wherein:

if the dynamically configured BRG type information for the each UE is configured in units of a subframe, the BRG type information for each UE is transmitted through a downlink control channel every subframe.

14. A method for receiving Basic Resource Grid (BRG) type information by a user equipment (UE) in a wireless communication system supporting a plurality of serving cells, the method comprising:

receiving basic resource grid (BRG) type information of at least one serving cell configured in the UE from a base station (BS); and
transmitting uplink data through the at least one serving cell on the basis of the received BRG type information.

15. A base station (BS) for transmitting Basic Resource Grid (BRG) type information in a wireless communication system supporting a plurality of serving cells comprising:

a processor configured to configure a basic resource grid (BRG) type for each of at least one serving cell configured in a user equipment (UE); and
a transmitter for transmitting the configured BRG type information to the UE.

16. A base station (BS) for transmitting Basic Resource Grid (BRG) type information in a wireless communication system supporting a plurality of serving cells comprising:

    a processor for configuring a basic resource grid (BRG) type for each user equipment (UE) in a serving cell commonly configured in a plurality of UEs; and
    a transmitter for transmitting the configured BRG type information to the plurality of UEs.

17. A user equipment (UE) for receiving Basic Resource Grid (BRG) type information in a wireless communication system supporting a plurality of serving cells comprising:

    a receiver for receiving basic resource grid (BRG) type information of at least one serving cell configured in the UE from a base station (BS); and
    a transmitter for transmitting uplink data through the at least one serving cell on the basis of the received BRG type information.

# FIG. 1

# FIG. 2

1 radio frame, $T_f = 307200T_s = 10ms$

1 slot, $T_{slot} = 15360T_s = 0.5ms$

| #0 | #1 | #2 | #3 | · · · | #18 | #19 |

1 subframe

# FIG. 3

(a)

(b)

# FIG. 4

One DL slot $T_{slot}$

$N_{symb}^{DL}$ OFDM symbols

$k = N_{RB}^{DL} N_{SC}^{RB} - 1$

Resource block
$N_{symb}^{DL} \times N_{SC}^{RB}$ Resource element

Resource element (k,l)

$N_{RB}^{DL} \times N_{SC}^{RB}$ subcarriers

$N_{SC}^{RB}$ subcarriers

$k = 0$

$l = 0$

$l = N_{symb}^{DL} - 1$

# FIG. 5A

← ── 14 SC-FDMA symbols ── →

12 subcarriers

← 1 slot →

☐ Resource Element for data

▨ Resource Element for DM RS

# FIG. 5B

7 symbols

12 subcarriers

1 slot

☐ Resource Element for data

▨ Resource Element for DM RS

# FIG. 5C

7 symbols

24 subcarriers

Resource
Element for
data

Resource
Element for
DM RS

FIG. 5D

14 SC-FDMA symbols

6 subcarriers

Resource Element for data

Resource Element for DM RS

# FIG. 6A

# FIG. 6B

――――――― 1 slot ―――――――

Time domain

Physical
(or logical)
frequency
domain

| BRG #0 | BRG #1 |
|--------|--------|
| BRG #2 | BRG #3 |
| BRG #4 | BRG #5 |

.

.

.

.

| BRG #216 | BRG #217 |
|----------|----------|
| BRG #218 | BRG #219 |

――――― 1ms subframe ―――――

BRG indexing for UE2